# EUROPEAN PATENT APPLICATION

(11) **EP 4 567 378 A1**
(43) Date of publication of application: **11.06.2025**
(21) Application number: 23849726.7
(22) Date of filing: 22.05.2023
(51) Int. Cl.: G01C 15/00

(54) **SURVEYING SYSTEM, SURVEYING METHOD, AND SURVEYING PROGRAM**

(30) Priority: 03.08.2022 JP 2022123745
(71) Applicant: TOPCON CORPORATION, Tokyo 174-8580 (JP)
(72) Inventor: NISHITA, Nobuyuki, Tokyo 174-8580 (JP); TANAKA, Takashi, Tokyo 174-8580 (JP); SHIGETA, Masahiro, Tokyo 174-8580 (JP)
(74) Representative: Louis Pöhlau Lohrentz
(86) International application number: PCT/JP2023/018934
(87) International publication number: WO 2024/029163

(57) **Abstract**

A surveying system (1) comprising a target device (3) including a pole (14) and a target (15) of which a distance from a lower end of the pole is known, and a surveying instrument (2) capable of measuring the target, wherein the pole is swung in a state where the lower end of the pole coincides with a predetermined measuring point (13), and the surveying instrument is configured to measure the target at least at three points, to calculate three-dimensional coordinates of a virtual measurement point based on each measurement result of the target, to calculate a degree of coincidence between the measuring point and the virtual measurement point as a certainty degree, and to perform an operation of completion of measurement when the certainty degree satisfies a preset threshold value.

## Description

### TECHNICAL FIELD

The present invention relates to a surveying system, surveying method, and surveying program, capable of surveying three-dimensional coordinates of a desired measuring point.

### BACKGROUND ART

When surveying a desired measuring point, surveying is generally performed using a prism or the like having a retro-reflectivity. In prism surveying using a prism, for instance, a pole on which the prism is provided at a known position is installed at a measuring point, and the prism is levelled so as to be positioned vertically above a measuring point via a bubble tube or the like, and then the prism is measured using a surveying instrument, such as a total station.

However, when performing prism surveying at a plurality of measuring points, because of the prism performs leveling each time it moves between the measuring points, time is required for measurement and workability is reduced.

Further, when a corner of a room used as a measuring point, it is not possible to vertically level a pole. When it is not possible to install a prism vertically above a measuring point, it is difficult to survey using a prism.

Furthermore, there is also a surveying instrument capable of measuring a corner of a room, and the like, by providing a tilt angle detector on a pole, and by detecting a tilt angle of the pole by the tilt angle detector and correcting a measured value based on the detected tilt angle. However, there is a possibility that the surveying instrument may cause an error in measurement results depending on a direction to be tilted, and further, the prism may be hidden and the prism may not be possible to sight the prism.

### PRIOR ART REFERENCES

### PATENT DOCUMENT

Patent Document 1: Patent Publication JP-A-2002-022443
Patent Document 2: Patent Publication JP-A-2020-038180

### SUMMARY OF THE INVENTION

### PROBLEM TO BE SOLVED BY THE INVENTION

It is an object of the present invention to provide a surveying system, a surveying method, and a surveying program capable of prism surveying even when it is not possible to install a prism vertically above a measuring point.

### MEANS FOR SOLVING THE PROBLEM

The present invention relates to a surveying system comprising a target device including a pole and a target of which a distance from a lower end of the pole is known, and a surveying instrument capable of measuring the target, wherein the pole is swung in a state where the lower end of the pole coincides with a predetermined measuring point, and the surveying instrument is configured to measure the target at least at three points, to calculate three-dimensional coordinates of a virtual measurement point based on each measurement result of the target, to calculate a degree of coincidence between the measuring point and the virtual measurement point as a certainty degree, and to perform an operation of completion of measurement when the certainty degree satisfies a preset threshold value.

Further, the present invention relates to the surveying system, wherein the surveying instrument is configured to calculate a center of a sphere fitting to each measurement result as the measuring point, using a distance from the lower end of the pole to the target as a radius, to calculate a reference sphere normalizing the radius of the sphere as 1, to calculate an area of the smallest curved surface including an entire point cloud of a surface of the reference sphere, and to calculate the certainty degree based on a comparison between the curved surface and a preset reference curved surface.

Further, the present invention relates to the surveying system, wherein the surveying instrument is configured to calculate a center of a sphere fitting to each measurement result as the measuring point, using a distance from the lower end of the pole to the target as a radius, to calculate a reference sphere normalizing the radius of the sphere as 1, to convert a point cloud of a surface of the reference sphere into polar coordinates centered on an average position of the point cloud, to project the point cloud on the polar coordinates onto a polar coordinate plane surface, to divide the polar coordinate plane surface into a predetermined number of division areas in a circumferential direction, to select a point farthest from a center of the polar coordinate plane surface from the point cloud in each division area, to calculate a plane surface based on each selected point cloud, and to calculate the certainty degree based on a comparison between the plane surface and a preset reference plane surface.

Further, the present invention relates to the surveying system, wherein the surveying instrument is configured to calculate a radius of a sphere fitting to each measurement result at least at four points, to compare between the radius and a distance from the lower end of the pole to the target, and to calculate the certainty degree based on a difference between the distance and the radius of the sphere.

Further, the present invention relates to the surveying system, wherein the surveying instrument is configured to calculate a sphere fitting to each measurement result each time the target is measured, and to calculate the certainty degree based on a distance between a center of the sphere and a center of a sphere calculated last time.

Further, the present invention relates to the surveying system, wherein the surveying instrument is configured to calculate a standard deviation based on a distance between a center of the sphere and each measurement result, and to correct the certainty degree based on the standard deviation.

Further, the present invention relates to the surveying system, wherein the surveying instrument further comprises a tracking function, and the surveying instrument is configured to be measurable while tracking the target.

Further, the present invention relates to the surveying system, wherein the surveying instrument is configured to sequentially calculate a sphere fitting to at least three measurement results of the targets continuously measured, each time the target is measured, and to judge whether the target device is installed at the measuring point based on whether a distance between centers of the respective spheres converges within a range of a preset threshold value.

Further, the present invention relates to the surveying system, wherein the surveying instrument is configured to measure the target at predetermined time intervals, to calculate a center of a sphere fitting to at least three measurement results of the target continuously measured, as the virtual measurement point, each time the target is measured, and to judge that the target device is installed at the measuring point when the certainty degree of the virtual measurement point satisfies the threshold value.

Further, the present invention relates to the surveying system, wherein the surveying instrument is configured to measure the target at predetermined time intervals, to calculate a center of a sphere fitting to a measurement result of the target before a predetermined time, as the virtual measurement point, each time the target is measured, to judge that the target device is installed at the measuring point when the certainty degree of the virtual measurement point satisfies the threshold value, and to calculate a center of the sphere fitting to the latest measurement result, as the measuring point.

Further, the present invention relates to the surveying system, wherein the surveying instrument is configured to calculate a distance between the targets or a speed of the target based on a measurement result of the target and a measurement result of the target measured one time before, to compare the distance or the speed with a preset threshold value, and to discard a measurement result judged to be the threshold value or more.

Further, the present invention relates to a surveying method comprising a step of causing a pole to swing in a state where a lower end of the pole coincides with a predetermined measuring point, a step of causing a surveying instrument to measure a target provided at a position where a distance from the lower end of the pole is known, at least at three points, a step of causing the surveying instrument to calculate three-dimensional coordinates of a virtual measurement point based on each measurement result of the target, a step of causing the surveying instrument to calculate a degree of coincidence between the measuring point and the virtual measurement point as a certainty degree, and a step of causing the surveying instrument to provide notification of an alarm indicating completion of measurement when the certainty degree satisfies a preset threshold value.

Further, the present invention relates to the surveying method, wherein in the step of causing the pole to swing, a distance or a speed between the measurement result of the target measured at the three points and a measurement result of the target measured at the three points one time before are less than a preset threshold value.

Further, the present invention relates to the surveying method, wherein in the step of causing the pole to swing, causing the pole to swing such that the target draws a locus which passes through the three points and one point inside a triangle formed of the three points.

Furthermore, the present invention relates to a surveying program for causing a surveying instrument to execute processing, the processing comprising a process of measuring a target at least at three points, the target provided at a position where a distance from a lower end of a pole is known and swung in a state where the lower end of the pole coincides with a measuring point, a process of calculating three-dimensional coordinates of a virtual measurement point based on each measurement result of the target, a process of calculating a degree of coincidence between the measuring point and the virtual measurement point as a certainty degree, and a process of providing notification indicating completion of measurement when the certainty degree satisfies a preset threshold value.

### EFFECTS OF THE INVENTION

According to the present invention, a surveying system comprises a target device including a pole and a target of which a distance from a lower end of the pole is known, and a surveying instrument capable of measuring the target, wherein the pole is swung in a state where the lower end of the pole coincides with a predetermined measuring point, and the surveying instrument is configured to measure the target at least at three points, to calculate three-dimensional coordinates of a virtual measurement point based on each measurement result of the target, to calculate a degree of coincidence between the measuring point and the virtual measurement point as a certainty degree, and to perform an operation of completion of measurement when the certainty degree satisfies a preset threshold value. As a result, it is no longer necessary to level the target device such that the target is positioned vertically above the measuring point, and therefore it is possible to reduce working time and to improve measurement accuracy.

Further, according to the present invention, a surveying method comprises a step of causing a pole to swing in a state where a lower end of the pole coincides with a predetermined measuring point, a step of causing a surveying instrument to measure a target provided at a position where a distance from the lower end of the pole is known, at least at three points, a step of causing the surveying instrument to calculate three-dimensional coordinates of a virtual measurement point based on each measurement result of the target, a step of causing the surveying instrument to calculate a degree of coincidence between the measuring point and the virtual measurement point as a certainty degree, and a step of causing the surveying instrument to provide notification of an alarm indicating completion of measurement when the certainty degree satisfies a preset threshold value. As a result, it is no longer necessary to position the target vertically above the measuring point, and therefore it is possible to reduce working time and to improve measurement accuracy.

Furthermore, according to the present invention, a surveying program causes a surveying instrument to execute processing, the processing comprising a process of measuring a target at least at three points, the target provided at a position where a distance from a lower end of a pole is known and swung in a state where the lower end of the pole coincides with a measuring point, a process of calculating three-dimensional coordinates of a virtual measurement point based on each measurement result of the target, a process of calculating a degree of coincidence between the measuring point and the virtual measurement point as a certainty degree, and a process of providing notification indicating completion of measurement when the certainty degree satisfies a preset threshold value. As a result, it is no longer necessary to position the target vertically above the measuring point, and therefore it is possible to reduce working time and to improve measurement accuracy.

### BRIEF DESCRIPTION OF DRAWINGS

FIG.1 is a schematical diagram showing a surveying system according to a first embodiment of the present invention.
FIG.2 is a schematical block diagram showing a surveying instrument according to the first embodiment of the present invention.
FIG.3A is an explanatory diagram showing swinging of a target device, and FIG.3B is an explanatory diagram showing a sphere to be fitted to a measurement result.
FIG.4 is an explanatory diagram for explaining a method of obtaining a certainty degree of a measuring point according to the first embodiment of the present invention.
FIG.5 is a flow chart for explaining a measurement performed by the surveying system according to the first embodiment of the present invention.
FIG.6A and FIG.6B are explanatory diagrams for explaining a method of obtaining a certainty degree of a measuring point according to a second embodiment of the present invention.
FIG.7A and FIG.7B are explanatory diagrams for explaining a method of obtaining a certainty degree of a measuring point according to a third embodiment of the present invention.
FIG.8A and FIG.8B are explanatory diagrams for explaining a method of obtaining a certainty degree of a measuring point according to a fourth embodiment of the present invention.
FIG.9A and FIG.9B are explanatory diagrams for explaining a correction method of a certainty degree of a measuring point according to a fifth embodiment of the present invention.
FIG.10A, FIG.10B, and FIG.10C are explanatory diagrams respectively showing modified examples of a target device.
FIG.11 is an explanatory diagram showing swinging of a target device according to a sixth embodiment of the present invention.
FIG.12 is a flow chart for explaining a measurement performed by a surveying system according to the sixth embodiment of the present invention.

### MODE(S) FOR CARRYING OUT THE INVENTION

Description will be given below on embodiments of the present invention by referring to attached drawings.

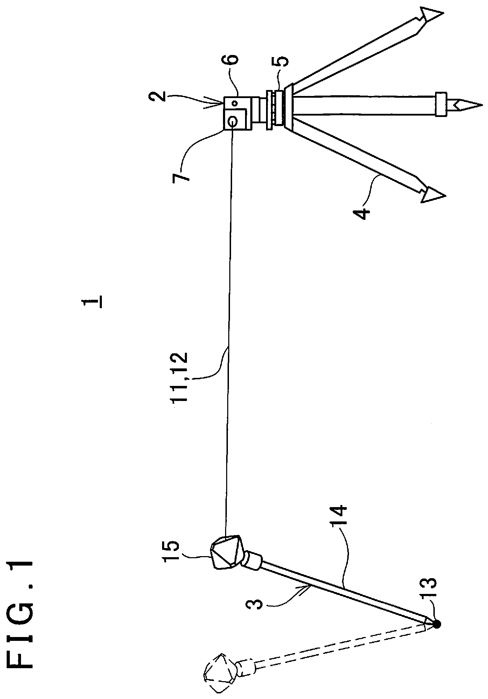

First, in FIG.1, description will be given on a surveying system according to a first embodiment of the present invention.

A surveying system 1 includes a surveying instrument 2 and a target device 3. The surveying instrument 2 is, for instance, a total station including a tracking function and includes a leveling module 5 attached to a tripod 4, and a surveying instrument main body 6 attached to the leveling module 5 and capable of horizontally rotating with respect to the leveling module 5. The surveying instrument 2 is installed at a reference point having known three-dimensional coordinates.

The leveling module 5 includes a sensor (not shown) for detecting a tilt of the leveling module 5, and a motor (not shown) for driving leveling screws which levels the leveling module 5. The leveling module 5 is configured to automatically level the leveling module 5 based on a detection result of the sensor.

The surveying instrument main body 6 includes a telescope module 7 capable of vertically rotating with respect to the surveying instrument main body 6. Further, the telescope module 7 incorporates a distance measuring module 8 (to be described later) and a tracking module 9. The distance measuring module 8 is configure to project a distance measuring light 11 onto a distance measuring optical axis and to measure a distance to an object based on reflected distance measuring light reflected by the object. Further, the tracking module 9 is configured to project a tracking light 12 coaxial with the distance measuring light 11 onto a tracking optical axis (onto the distance measuring optical axis), and to track the object based on a reflected tracking light reflected by the object.

The target device 3 includes a rod-shaped pole 14 installed at a measuring point 13, and a prism 15 as a target (object) provided on an upper end of the pole 14. A lower end portion of the pole 14 is tapered in shape with a diameter reducing downward, and a lower end thereof is formed into a sharp tip. The prism 15 is, for instance, an omnidirectional prism having a retro-reflectivity. An optical center of the prism 15 is positioned on an axis of the pole 14, and a distance to the optical center of the prism 15 from the lower end of the pole 14 is known.

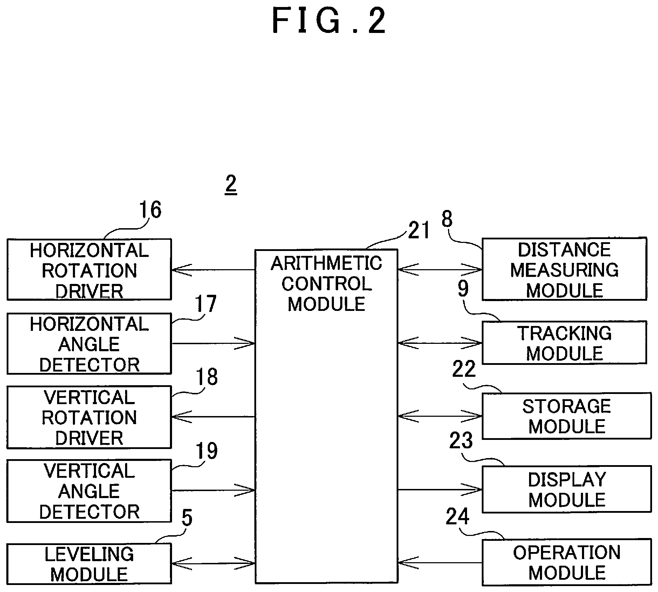

Next, in FIG.2, a description will be given on a configuration of the surveying instrument 2.

The surveying instrument 2 includes a horizontal rotation driver 16 configured to horizontally rotate the surveying instrument main body 6 with respect to the leveling module 5, a horizontal angle detector 17 configured to detect a rotation angle (horizontal angle) of the surveying instrument main body 6, a vertical rotation driver 18 configured to vertically rotate the telescope module 7 with respect to the surveying instrument main body 6, and a vertical angle detector 19 configured to detect a rotation angle (vertical angle) of the telescope module 7. Further, the surveying instrument 2 includes an arithmetic control module 21, a storage module 22, a display module 23, and an operation module 24.

It is to be noted that a driving module for the surveying instrument 2 is constituted of the horizontal rotation driver 16 and the vertical rotation driver 18, and an angle measuring module for detecting an irradiation direction of the distance measuring light 11 is constituted of the horizontal angle detector 17 and the vertical angle detector 19.

The arithmetic control module 21 includes a CPU specialized for the present embodiment, a general-purpose CPU, a built-in CPU, or a microprocessor. Further, the storage module 22 includes a semiconductor memory such as a RAM, a ROM, a Flash ROM, a DRAM, a magnetic storage memory such as an HDD, or an optical storage memory such as a CD-ROM.

The storage module 22 stores various types of programs. These programs include: a sequence program for controlling a measuring operation, a distance measuring program for calculating a distance by a distance measuring operation, an angle measuring program for calculating an irradiation direction (angle) of the distance measuring light 11 and the tracking light 12 based on a detection result of the horizontal angle detector 17 and the vertical angle detector 19, a measuring program for calculating three-dimensional coordinates of the prism 15 based on the distance and the angle, a leveling program for causing the leveling module 5 to level, a tracking program for causing the tracking module 9 to track the prism 15, a calculation program for calculating three-dimensional coordinates of a virtual measurement point based on measurement results (distance measurement results and angle measurement results) of at least different three positions of the prism 15, a certainty degree calculation program for calculating a degree of coincidence between the measuring point 13 and the virtual measurement point as the certainty degree, a notification program for notifying that the calculated certainty degree exceeds a preset threshold value, a drive control program for controlling the driving module including the horizontal rotation driver 16 and the vertical rotation driver 18, and a display program for displaying a measurement result, etc on the display module 23.

Further, the storage module 22 stores various types of data. These data include: measurement data (distance measurement data and angle measurement data) obtained when measuring the prism 15, three-dimensional coordinate data of the measuring point 13 calculated based on the measurement data. Further, the storage module 22 stores a threshold value for judging the certainty degree of a center position of a sphere with respect to the measuring point 13 described below. It is to be noted that the certainty degree indicates how well a position of a virtual measurement point 13a obtained by calculation coincides with the measuring point 13, that is, a degree of coincidence between the measuring point 13 and the virtual measurement point 13a. The arithmetic control module 21 develops and executes various programs stored in the storage module 22, and executes various processing.

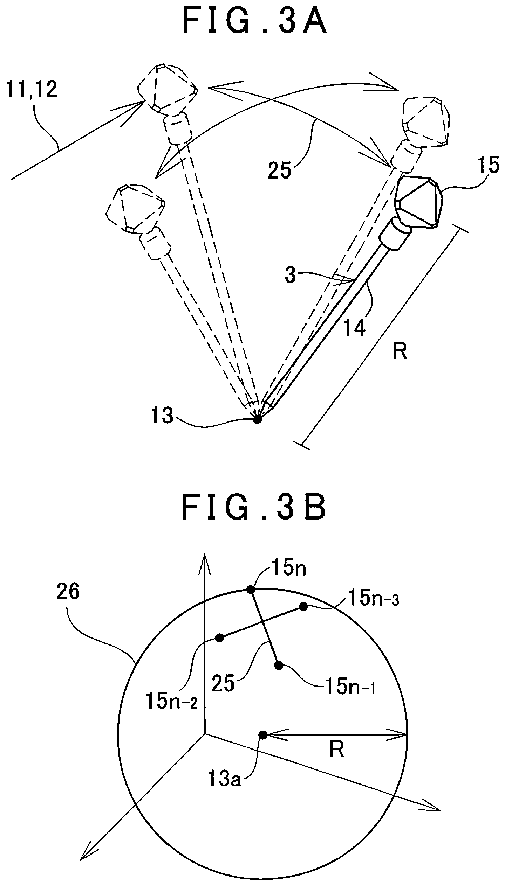

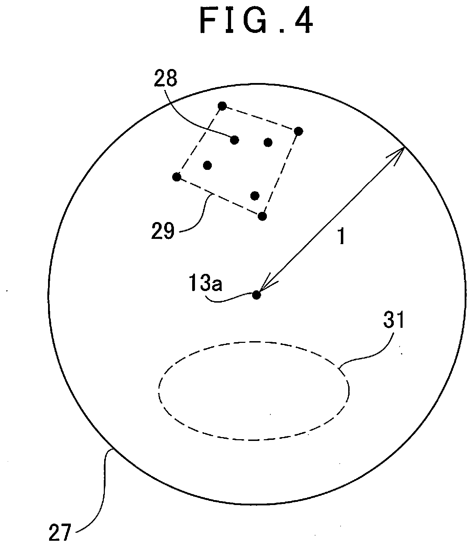

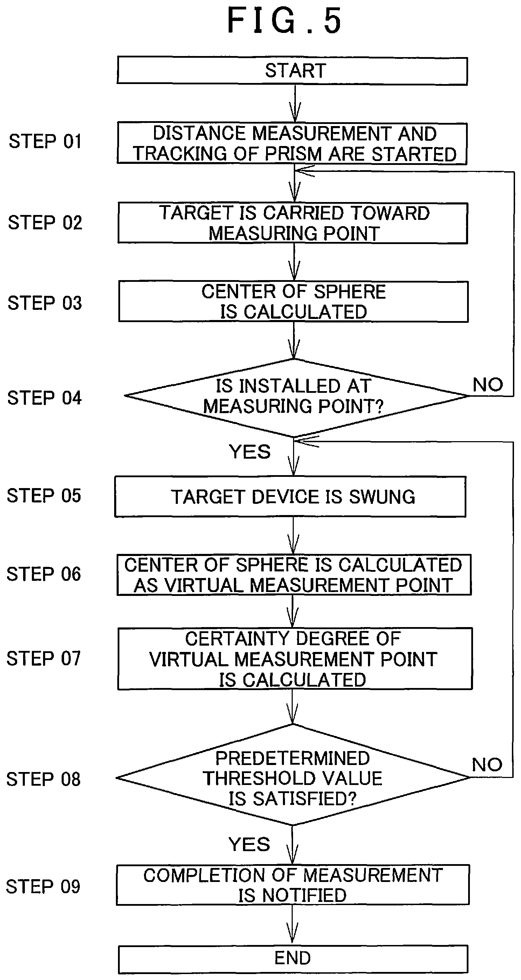

Next, a description will be given on a measurement using the surveying system by referring to FIG.3A, FIG.3B, FIG.4, and a flow chart of FIG.5.

(Step 01) First, the arithmetic control module 21 causes the telescope module 7 to sight the prism 15 and to start a measurement and tracking with respect to the prism 15.

The surveying instrument 2 executes a measurement (distance measurement, angle measurement) of the prism 15 at predetermined intervals, for instance, 20 Hz intervals, while tracking the prism 15. Therefore, the surveying instrument 2 obtains three-dimensional coordinates (point cloud) of a plurality of portions along a locus 25 of the prism 15. It is to be noted that intervals of measurement are not limited to 20 Hz, and it is possible to select suitable intervals, such as 10 Hz or 30 Hz.

It is to be noted that, in a measurement of the prism 15, there may be a gap between timing of distance measurement and timing of angle measurement with respect to the prism 15. In this case, it is possible to improve measurement accuracy of the prism 15 by discarding a measurement result which is out of timing.

(Step 02) While the surveying instrument 2 is caused to track the prism 15, a worker carries the target device 3 toward the predetermined measuring point 13.

(Step 03) A distance (offset length R) from a lower end of the pole 14 to an optical center of the prism 15 is known. The arithmetic control module 21 calculates a sphere 26 having a radius which is an offset length "R" and fits the sphere 26 with respect to a point cloud formed of at least three consecutive points as set in advance. As shown in FIG.3B, when fitting the sphere 26, for instance, to four points, the sphere 26 is fitted to the following four points, that is, the prism 15n measured at n-th time in n-th measurement, the prism 15n-1 measured at (n-1)th time measurement, which is a measurement one time before, the prism 15n-2 measured at (n-2)th time measurement, which is a measurement two times before, and the prism 15n-3 measured at (n-3)th time measurement, which is a measurement three times before. That is, the sphere 26 is sequentially fitted to four points continuously measured.

Alternatively, the arithmetic control module 21 calculates the sphere 26 having a radius which is the offset length "R" and passing through three-dimensional coordinates of the prism 15n, 15n-1, 15n-2, and 15n-3 which are measured four points.

Further, the arithmetic control module 21 sequentially calculates the sphere 26 fitting to four points, each time the prism 15 is measured, and calculates a center of the sphere 26.

(Step 04) The arithmetic control module 21 judges whether the sphere 26 fitting to the four points is present, and further judges whether a distance between centers of the respective spheres 26 as sequentially calculated converges to a preset threshold value or less.

When it is impossible to calculate the sphere 26 fitting to the four points or when the center of the sphere 26 sequentially calculated is not converged to the threshold value or less, the arithmetic control module 21 judges that the target device 3 is moving and discards a measurement result. After discarding the measurement result, the arithmetic control module 21 continues calculation of the sphere 26 and calculation of the center of the sphere 26.

Further, when the sphere fitting to the four points is present and the center of the sphere 26 converges to the preset threshold value or less, the arithmetic control module 21 judges that the target device 3 is installed at the measuring point 13, that is, the lower end of the pole 14 coincides with the measuring point 13.

(Step 05) After installing the target device 3, while the lower end of the pole 14 coincides with the measuring point 13, a worker causes the target device 3 to swing at a predetermined angle in a predetermined direction. For instance, as shown in FIG.3A, the target device 3 is swung at ±15° in a cross shape.

It is to be noted that swinging of the target device 3 is not limited to a cross shape, and that, for instance, worker may swing the target device 3 such that the prism 15 draws a circle, or worker may swing the target device 3 such that the prism 15 draws a figure eight. That is, it is only necessary that a swinging direction has a two-dimensional spread. Further, a tilting angle of the target device 3 is not be limited to ±15° and may be more than 15° or may be less than 15°.

From a time when it is judged that the target device 3 is installed at the measuring point 13, the arithmetic control module 21 sequentially stores and accumulates measurement results of the prism 15 as a point cloud in the storage module 22.

(Step 06) The arithmetic control module 21 calculates the sphere 26 fitting to the accumulated point cloud and calculates a center of the sphere 26 as a virtual measurement point 13a.

(Step 07) After calculating the virtual measurement point 13a, the arithmetic control module 21 calculates a certainty degree "A" of the virtual measurement point 13a. Herein, the certainty degree "A" of the virtual measurement point 13a is a value indicating a degree of coincidence of how well the calculated virtual measurement point 13a coincides with the actual measuring point 13.

The arithmetic control module 21 calculates the certainty degree "A" of the measuring point 13 based on a spread of consecutive four points of measurement results (point cloud) of the prism 15 on the sphere 26 having a radius which is an offset length "R" and a center which is the virtual measurement point 13a, as shown in FIG.3B, for instance. That is, the arithmetic control module 21 calculates the certainty degree "A" of the virtual measurement point 13a based on the spread of an entire point cloud stored in the storage module 22 after installing the target device 3.

In the above-described method, first, the arithmetic control module 21 normalizes the sphere 26 to a reference sphere 27, as shown in FIG.4. The reference sphere 27 is a sphere normalized as offset length R=1 and having a center which is the virtual measurement point 13a and a radius which is 1. That is, three-dimensional coordinates of the point cloud obtained by measuring the prism 15 and positioned on a surface of the sphere 26 are converted into a point cloud 28 positioned on a surface of the reference sphere 27 having a center which is the virtual measurement point 13a.

Next, the arithmetic control module 21 calculates an area S of the smallest curved surface 29 including an entire point cloud 28 positioned on the surface of the reference sphere 27. The curved surface 29 is a curved surface forming a part of the surface of the reference sphere 27. It is to be noted that a reference curved surface 31 for performing a comparison with the area S is stored in the storage module 22. The reference curved surface 31 is a curved surface forming a part on a surface of the reference sphere 27 having an area B. Herein, the area B has a size capable of obtaining desired fitting accuracy when the point cloud 28 is fitted to the reference sphere 27.

It is possible to express the certainty degree "A" of the virtual measurement point 13a as the certainty degree A = area S / area B. The arithmetic control module 21 calculates the certainty degree "A" of the virtual measurement point 13a based on the area "S" of the curved surface 29 and the area "B" of the reference curved surface 31.

(Step 08) When the certainty degree "A" of the virtual measurement point 13a is calculated, the arithmetic control module 21 judges whether the certainty degree "A" of the virtual measurement point 13a satisfies a predetermined threshold value, for instance, whether the certainty degree A is 1 or more. That is, the arithmetic control module 21 judges whether the area "S" is the area "B" or more. When the certainty degree becomes 1 or more, it is possible for the arithmetic control module 21 to judge that the reference sphere 27 is fitted with respect to the point cloud 28 with desired fitting accuracy.

When it is judged that the certainty degree A is less than 1, that is, the area "S" is smaller than the area "B", and does not satisfy the threshold value, the target device 3 is more greatly swung so as to increase the area "S", and the processing of (Step 05) to (Step 08) is executed again. That is, each time the prism 15 is measured, the arithmetic control module 21 executes fitting of the sphere 26 with respect to each measurement result, and repeats calculation of the virtual measurement point 13a and fitting of the sphere 26 until the certainty degree becomes 1 or more.

(Step 09) When it is judged that the certainty degree "A" is 1 or more, that is, the area "S" has a size the area "B" or more, and satisfies the threshold value, the arithmetic control module 21 judges that the virtual measurement point 13a coincides or substantially coincides with the measuring point 13. The arithmetic control module 21 performs an operation of completion of measurement. Further, the arithmetic control module 21 stores, in the storage module 22, three-dimensional coordinates of the virtual measurement point 13a for which the certainty degree "A" is 1 or more, as three-dimensional coordinates of the measuring point 13.

As an operation of completion of measurement, for instance, an audible alarm notifies a worker of completion of measurement. Alternatively, as the certainty degree "A" becomes farther from 1, the sound being lower, and higher as the certainty degree "A" becomes closer to 1. Further, a sound may be generated intermittently, with intervals between sounds being wider as the certainty degree "A" becomes farther from 1, and narrower as the certainty degree "A" becomes closer to 1.

Alternatively, as an operation of completion of measurement, an optical alarm may be used. When using light, for instance, light is blinked, and a blinking frequency may be increased as the certainty degree "A" becomes farther from 1, and the blinking frequency may be decreased as the certainty degree A becomes closer to 1. Further, when the certainty degree "A" reaches 1, a color of the light may be changed. It is to be noted that each of the above-described alarm may be issued from the surveying instrument 2 or may be issued from an alarm notification mechanism separately provided in the target device.

Further, as an operation of completion of measurement, a value of area "S" / area "B" may be displayed as a percentage on the display module 23, and when area "S" / area "B" ≤ 1, the value may reach 100%. Further, as an operation of completion of measurement, when the certainty degree "A" satisfies the threshold value, a measurement may simply be ended and/or a measurement result may be displayed on the display module 23. It is to be noted that, needless to say, various operations of completion of measurement such as sound, light, and display may be combined with each other.

Based on a notification of alarm, a worker repeats the processing in (Step 02) to (Step 09) when other measuring points which should be measured are present. Further, when no measuring point which should be measured is present, the measurement processing is ended.

As described above, in the first embodiment, while the prism 15 is caused to track and measure by the surveying instrument 2, by only coinciding the lower end of the pole 14 at the measuring point 13 and swinging the target device 3 so as to have a two-dimensional spread, it is possible to calculate three-dimensional coordinates of the measuring point 13.

Therefore, it is no longer necessary to level the target device 3 such that the prism 15 is positioned vertically above the measuring point 13, and it is therefore possible to reduce working time and to improve working efficiency.

Further, in the first embodiment, based on whether the sphere 26 fitting to at least three points continuously measured is present and whether the center of the sphere 26 converges, the arithmetic control module 21 judges automatically whether the target device 3 is installed at the measuring point 13.

Therefore, it is no longer necessary to notify the surveying instrument 2 of completion of installation each time the target device 3 is installed at the measuring point 13, it is therefore possible to reduce working time and to improve the working efficiency.

It is to be noted that when three points are caused to fitted to the sphere 26, two three-dimensional coordinates of the center of the sphere 26, that is, the measuring point 13 where the target device 3 is installed, are obtained. On the other hand, when an up and down relationship between the prism 15 and the lower end of the pole 14 is clear, such as when measuring a floor, it is possible to uniquely determine three-dimensional coordinates of the measuring point 13.

Further, in the first embodiment, by being able to calculate the certainty degree indicating a degree to which the virtual measurement point 13a obtained by calculation coincides with the actual measuring point 13, and by adopting only a calculation result where the certainty degree satisfies the threshold value (is 1 or more), it is possible to measure the measuring point 13 with high accuracy.

Further, since the arithmetic control module 21 is configured to notify a worker of the predetermined alarm at a time point when the certainty degree satisfies the threshold value, a measurement result in which the certainty degree does not satisfy the threshold value is not obtained, and it is therefore possible to improve measurement accuracy. Further, since it is no longer necessary to perform measurement processing after a measurement result in which the certainty degree satisfied the threshold value is obtained, it is possible to reduce working time and to improve working efficiency.

It is to be noted that, in the first embodiment, the alarm is notified via the display module 23, but a worker may carry a mobile terminal capable of communicating with the surveying instrument 2 together with the target device 3, and the alarm may be notified to the mobile terminal. By notifying the alarm through the mobile terminal, it is possible to perform a measurement operation by one person and to improve workability.

Further, in the first embodiment, when a start instruction is entered, measurement and tracking are continued even when the target device 3 is moved or installed. On the other hand, only tracking of the prism 15 may be executed when the target device 3 is moved, and the prism 15 may be measured after installing the target device 3.

Further, in the first embodiment, according to whether the sphere 26 fitting to the point cloud formed of at least consecutive three points is present or the center of the sphere 26 sequentially fitted to the three points each time the prism 15 is measured converges to the predetermined threshold value or less, it is judged whether the target device 3 is moving or has been installed at the measuring point 13.

On the other hand, during tracking of the prism 15, the surveying instrument 2 may measure the prism 15 at every predetermined time intervals, for instance, every two seconds, and the arithmetic control module 21 may calculate the center of the sphere 26 fitting to at least three measurement results of the prism 15 continuously measured, as the virtual measurement point 13a, each time the prism 15 is measured, and may judge that the target device 3 is installed at the measuring point 13 when the certainty degree "A" of the virtual measurement point 13a satisfies the preset threshold value.

Alternatively, during tracking of the prism 15, the surveying instrument 2 may measure the prism 15 at every predetermined time intervals, and the arithmetic control module 21 may calculate the center of the sphere 26 fitting to a measurement result before a predetermined time or a predetermined number of times (for instance, five seconds or 5 times before), as the virtual measurement point 13a, each time the prism 15 is measured, may determine that the target device 3 is installed at the measuring point 13 when the certainty degree "A" of the virtual measurement point 13a satisfies the preset threshold value, and may calculate the center of the sphere 26 fitting to the latest measurement result as the measuring point 13.

In each case, only by installing the target device 3 at the measuring point 13, the arithmetic control module 21 automatically measures the measuring point 13, it is no longer necessary to instruct measurement start with respect to the surveying instrument 2 after installing the target device 3, and it is therefore possible to improve workability.

It is to be noted that when it is judged that the target device 3 is installed at the measuring point 13, the measurement of the measuring point 13 may be started after a predetermined time has elapsed. That is, after a predetermined time has elapsed, the arithmetic control module 21 may perform the processing in (Step 05) to (Step 09).

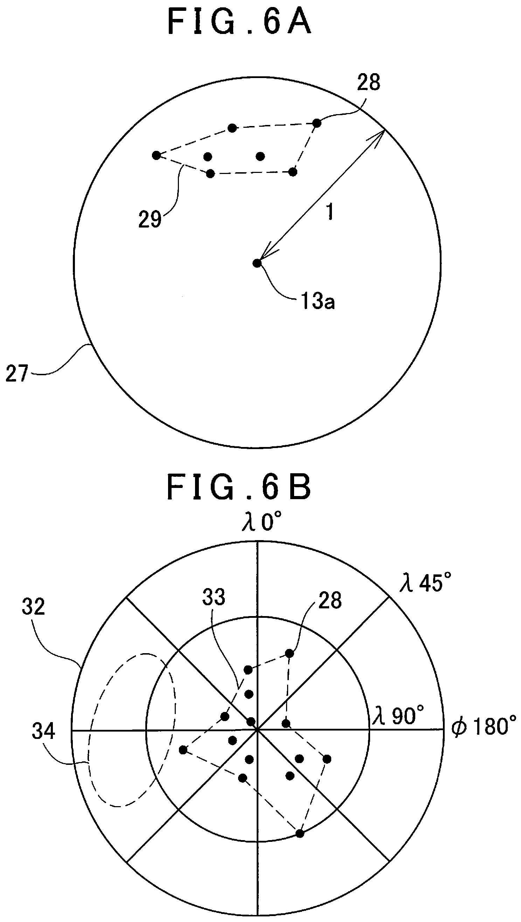

Next, a description will be given on a second embodiment of the present invention by referring to FIG.6A and FIG.6B. It is to be noted that, in FIG.6, the same components as shown in FIG.4 are referred by the same symbols, and description thereof will be omitted.

In the second embodiment, a method of obtaining a certainty degree is different from that in the first embodiment. The rest of configuration is the same as that of the first embodiment.

As shown in FIG.6A, in the second embodiment, after converting a sphere 26 (refer to FIG.3B) into a reference sphere 27, an arithmetic control module 21 (refer to FIG.2) calculates an average position of a point cloud 28 on the reference sphere 27 and converts three-dimensional coordinates of each point cloud 28 into polar coordinates (λ, φ) with the average position as a pole.

Further, the arithmetic control module 21 projects the point cloud 28 onto a polar coordinate plane surface 32. The arithmetic control module 21 divides the polar coordinate plane surface 32 into n areas (where n is an integer) in a longitude direction "A", extracts the most far point from a pole (center) from in each n-divided polar coordinate plane surface 32, and calculates an area S of a plane surface 33 obtained by connecting the extracted points to each other. At this time, the plane surface 33 is a part of the polar coordinate plane surface 32 onto which the point cloud 28 is projected. Further, a reference plane surface 34 having an area B and compared with the plane surface 33 is also planar.

Also in the second embodiment, the arithmetic control module 21 calculates certainty degree "A" expressed by certainty degree A= area S / area B, and judges whether the certainty degree "A" satisfies a predetermined threshold value, for instance, whether it is 1 or more. The rest of method is the same as that of the first embodiment.

In the second embodiment, the plane surface 33 and the reference plane surfaces 34 for obtaining the certainty degree are both plane. Therefore, regardless of a position in the longitude direction, it is possible to express an angle difference in latitude as an equivalent distance. That is, for instance, it is possible to substantially equivalent a distance between 10° (latitude) near a pole and 10° (latitude) near an equator in the reference sphere 27 to each other, and it is therefore possible to reduce an error when determining a spread of the point cloud 28 and to improve a precision of the certainty degree A.

Further, also in the second embodiment, the arithmetic control module 21 calculates certainty degree of the virtual measurement point 13a, compares the certainty degree with a threshold value, and adopts only the virtual measurement point 13a when the certainty degree satisfies the threshold value (1 or more). Therefore, it is possible to improve measurement accuracy of the measuring point 13.

It is to be noted that, in the second embodiment, the point cloud 28 of the reference sphere 27 is converted into polar coordinates and the point cloud is projected onto the polar coordinate plane surface 32. On the other hand, a method for projecting onto the plane surface is not limited to the above-described method. For instance, it is also possible to use projection methods where latitudinal direction of spacing is not equally spaced, such as a stereographic projection.

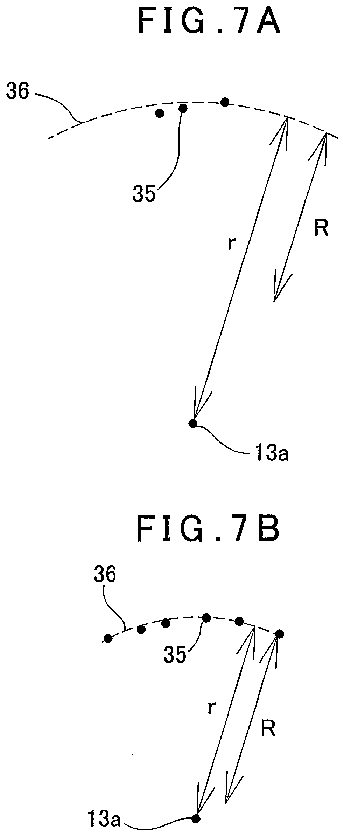

Next, a description will be given on a third embodiment of the present invention by referring to FIG.7A and FIG.7B. It is to be noted that, in FIG.7A and FIG.7B, the same components as shown in FIG.6A and FIG.6B are referred by the same symbols, and description thereof will be omitted.

In the third embodiment, after installing a target device 3 (refer to FIG.1), during a process in which the target device 3 is swung so as to have a two-dimensional spread, an arithmetic control module 21 (refer to FIG.2) calculates a sphere 36 fitting to a point cloud 35 which is a measurement result of each prism 15. At this time, the point cloud 35 is formed of at least four points, and a radius r of the sphere 36 is unknown.

After fitting the sphere 36, the arithmetic control module 21 calculates three-dimensional coordinates of a center of the sphere 36 as three-dimensional coordinates of a measuring point 13. It is to be noted that the measuring point 13 at this time is a virtual measurement point 13a and does not necessarily coincide with the actual measuring point 13.

On the other hand, an offset length R, which is a length of a pole 14 (refer to FIG.1) is known. The arithmetic control module 21 calculates a certainty degree of the virtual measurement point 13a based on the radius r of the sphere 36 and the known offset length R.

In the third embodiment, it is possible to express the certainty degree "A" as the certainty degree A= 1-|1-(r/R)|. The certainty degree in the third embodiment is utilizing a fact that the closer a length of the radius r of the sphere 36 and a length of the offset length "R" are to each other, the higher a precision of the virtual measurement point 13a. Therefore, the closer the certainty degree "A" is to 1, the higher measurement accuracy of the measuring point 13.

After the certainty degree A of the virtual measurement point 13a is calculated, the arithmetic control module 21 judges whether the certainty degree A satisfies a preset threshold value. For instance, the arithmetic control module 21 judges whether a difference between the certainty degree A and 1 is the threshold value or less. When the difference between the certainty degree A and 1 is judged to be the predetermined threshold value or less, an alarm for informing completion of measurement is notified.

Also in the third embodiment, the certainty degree of the virtual measurement point 13a is calculated, the arithmetic control module 21 compares the certainty degree with the threshold value and sets three-dimensional coordinates of the virtual measurement point 13a, in which the certainty degree satisfies the threshold value, as the three-dimensional coordinates of the measuring point 13. Accordingly, it is possible to improve measurement accuracy of the measuring point 13.

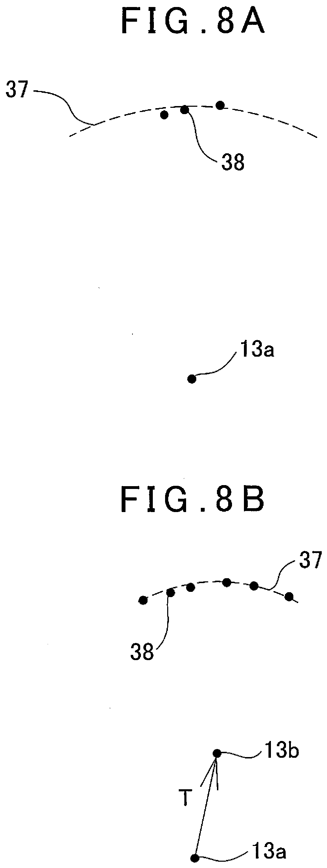

Next, a description will be given on a fourth embodiment of the present invention by referring to FIG.8A and FIG.8B. It is to be noted that, in FIG.8A and FIG.8B, the same components as shown in FIG.6A and FIG.6B are referred by the same symbols, and description thereof will be omitted.

In the fourth embodiment, a target device 3 (refer to FIG. 1) is caused to be swung, and an arithmetic control module 21 (refer to FIG.2) causes a sphere 37 to fit to a point cloud 38 each time a prism 15 (refer to FIG.1) is measured, and calculates a virtual measurement point 13a. The arithmetic control module 21 calculates a certainty degree of the virtual measurement point 13a based on three-dimensional coordinates P(n) of the virtual measurement point 13a calculated at n-th time and three-dimensional coordinates P(n-1) of the last virtual measurement point 13b calculated last time (at (n-1)th time).

In the fourth embodiment, it is possible to express a certainty degree "A" as the certainty degree A = √(P(n)-P(n-1))². The certainty degree in the fourth embodiment is utilizing a fact that the smaller a distance between the virtual measurement point 13a and the virtual measurement point 13b last time, the higher a precision of the virtual measurement point 13a.

After the certainty degree "A" of the virtual measurement point 13a is calculated, the arithmetic control module 21 judges whether the certainty degree "A" satisfies a preset threshold value. For instance, the arithmetic control module 21 judges whether the certainty degree "A" is the threshold value (distance "T") or less. When the certainty degree "A" is judged to be the predetermined threshold value or less, the arithmetic control module 21 stores the virtual measurement point 13a in a storage module 22 as a measurement result of a measuring point 13 and notifies an alarm for informing completion of measurement.

Also in the fourth embodiment, the arithmetic control module 21 calculates the certainty degree of the virtual measurement point 13a, compares the certainty degree with a threshold value and determines, as the measuring point 13, the virtual measurement point 13a judged such that the certainty degree satisfies the threshold value. Therefore, it is possible to improve measurement accuracy of the measuring point 13.

It is to be noted that, in the fourth embodiment, the virtual measurement point 13a is compared with the virtual measurement point 13b measured last time. On the other hand, needless to say, the virtual measurement point 13a may be compared with virtual measurement points 13n measured a predetermined number of times before.

Further, as the certainty degree of the virtual measurement point 13a, the certainty degree may be obtained based on not only the area or the distance but also aspect ratio (bias in distribution) or whether a region near the center is measured, or combination thereof.

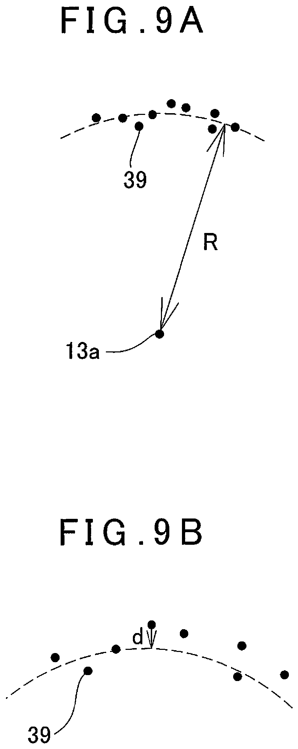

Next, a description will be given on a fifth embodiment of the present invention by referring to FIG.9A and FIG.9B. It is to be noted that, in FIG.9A and FIG.9B, the same components as shown in FIG.6A and FIG.6B are referred by the same symbols, and description thereof will be omitted.

The fifth embodiment is configured to correct the calculated certainty degree "A" and to reduce a factor of precision reduction of the certainty degree "A", and is executed in combination with the certainty degree calculation calculated in the first embodiment to the fourth embodiment.

In the fifth embodiment, an arithmetic control module 21 (refer to FIG.2) corrects the certainty degree "A" calculated by any one of the methods in the first embodiment to the fourth embodiment and calculates a corrected certainty degree "A'" of a virtual measurement point 13a.

In the fifth embodiment, the arithmetic control module 21 calculates a distance between the calculated virtual measurement point 13a and each point cloud 39. Further, the arithmetic control module 21 expresses a distance difference "d" between each obtained distance and an offset length "R" as ± and calculates a standard deviation "σR" based on a distribution of each point cloud 39.

By using the standard deviation "σR", it is possible to correct the certainty degree "A" and to express the certainty degree "A'" as the corrected certainty degree A' = A- (σR/R). By correcting the certainty degree "A" using the standard deviation and using the corrected certainty degree "A'", it is possible to suppress precision reduction when the sphere is fitted and therefore to improve measurement accuracy of the measuring point 13.

It is to be noted that, in the first embodiment to the fifth embodiment, a total station having a tracking function is used as a surveying instrument 2, it is not limited to such examples. For instance, by using a total station having no tracking function, the prism 15 of three or more points may be manually measured, the arithmetic control module 21 may calculate the virtual measurement point 13a and the certainty degree "A" based on a plurality of measurement results.

Further, in addition to the total station, it is possible to use a surveying instrument such as a three-dimensional laser scanner, a distance measurement camera, or a stereo camera.

Further, the surveying instrument 2 includes a tracking module 9 configured to project a tracking light 12 and to perform tracking based on the reflected tracking light reflected by a target. On the other hand, a target may be tracked by a camera, or an object may be tracked based on a coordinate signal of GPS or GNSS provided separately from the target device 3.

Further, the prism 15 which is an omnidirectional prism is used as a target. On the other hand, the target may be a single element prism or may be a reflection sheet wound on a pole 14. Alternatively, when using a laser scanner or a distance measurement camera, a target may be a reflector having a characteristic shape, such as a sphere, a cube, or a disk, provided on the pole 14, as shown in Patent Document 2. Further, when using a camera or a stereo camera, a target may be a recognition pattern provided on the pole 14, such as an AR marker or a QR code (registered trademark).

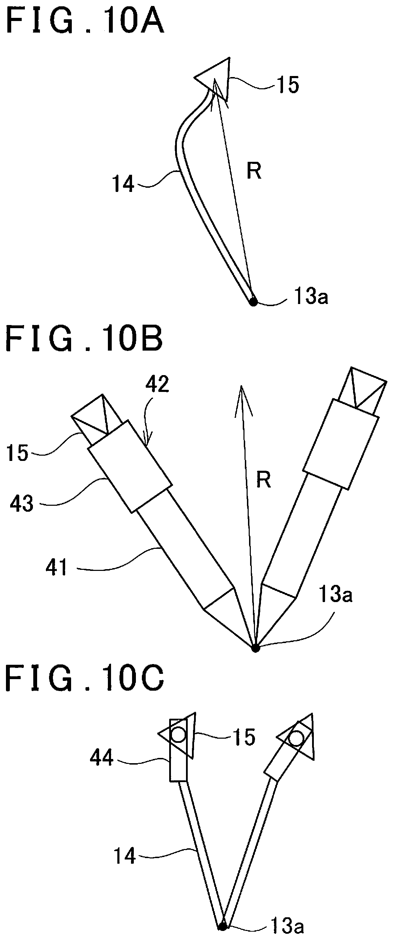

Further, in the first embodiment to the fifth embodiment, the prism 15 is provided on rod-shaped poles 14, such as a cylinder or a square pillar, the pole 14 is not limited to being rod-shaped. It is sufficient that a distance from a lower end of a pole 14 which coincides with the measuring point 13 to an optical center of the prism 15, that is, an offset length "R", is known, and that the offset length "R" does not change. Therefore, the pole 14 on which the prism 15 is provided may be a curved rigid body, as shown, for instance, in FIG.10A.

Alternatively, as shown in FIG.10B, a prism unit 42 attachable/detachable to/from an axial bottom portion of a general-purpose writing instrument 41 may be used. The prism unit 42 includes an attachment unit 43 for attaching/detaching to/from the writing instrument 41, and a prism 15 fixed to the attachment unit 43. By measuring a length (offset length "R") from a lower end of the writing instrument 41 to an optical center of the prism 15 when attaching the prism unit 42 to the writing instrument 41, the writing instrument 41 functions as a pole. Therefore, it is possible to use the writing instrument 41 and the prism unit 42 in a similar manner to the target device 3.

Further, in the first embodiment to the fifth embodiment, the prism 15, which is an omnidirectional prism, is fixedly provided on the pole 14, but may be provided on the pole 14 via a gimbal mechanism 44, as shown in FIG.10C. By being provided via the gimbal mechanism 44, it is possible to provide the prism 15 so as to always face substantially horizontal direction regardless of an inclination of the pole 14, and even when the prism 15 is a single element prism, it is therefore possible for the surveying instrument 2 to always measure and track the prism 15. It is to be noted that the above-described gimbal mechanism 44 is configured to maintain a substantially horizontal state regardless of an inclination of the pole 14. On the other hand, a gimbal mechanism capable of maintaining both an orientation (direction) and a horizontal state may be used as the gimbal mechanism 44.

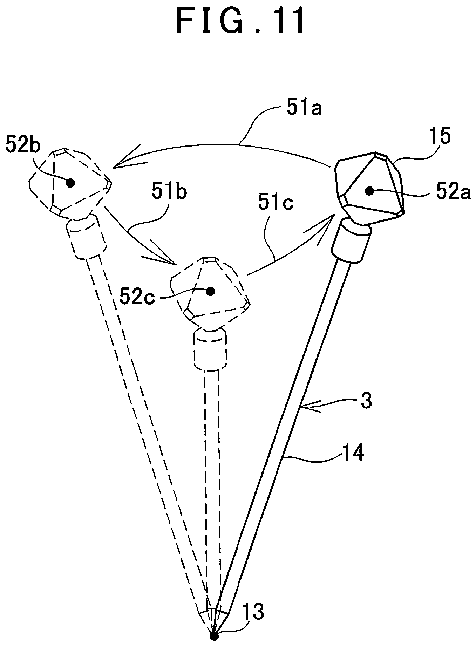

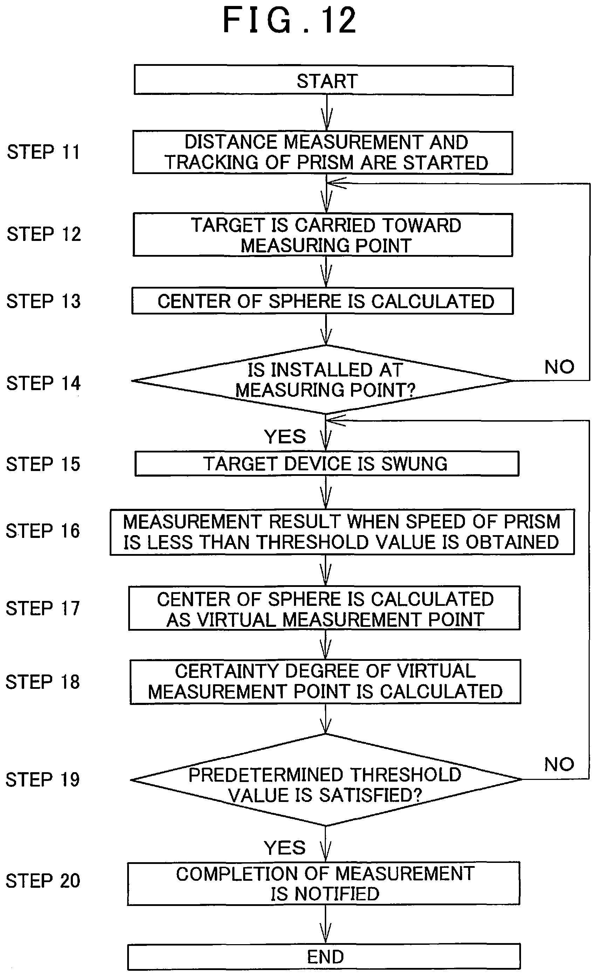

Next, a description will be given on a sixth embodiment of the present invention by referring to FIG.11 and a flow chart of FIG.12. It is to be noted that, in FIG.11, the same components as shown in FIG.3A are referred by the same symbols, and description thereof will be omitted.

In the first embodiment to the fifth embodiment, when a target device 3 is swung, a measurement result is obtained at predetermined time intervals along a locus of a prism 15, and an arithmetic control module 21 calculates a sphere 26 (refer to FIG. 3B) and a measuring point 13 based on each obtained measurement result.

On the other hand, a system is conceivable in which timing of distance measurements and timing of angle measurements do not coincide with each other. In this case, the further a distance between a position where a distance measurement is performed and a position where an angle measurement is performed, the lower measurement accuracy. Therefore, computation accuracy of the measuring point 13 calculated based on a measurement result in which measurement accuracy decreased also decreases.

In the present embodiment, the arithmetic control module 21 is configured to discard an obtained measurement result (three-dimensional coordinates), as a low-precision measurement result when a speed of swinging the prism 15 is fast, that is, when a distance measurement position and an angle measurement position are separated, and to use only a high-precision measurement result for a calculation of the measuring point 13.

Next, a description will be given on a measurement using a surveying system according to the sixth embodiment by referring to a flow chart of FIG.12. It is to be noted that, in FIG.12, since (Step 11) to (Step 14) are similar to (Step 01) to (Step 04) in FIG.5, and (Step 17) to (Step 20) are similar to (Step 06) to (Step 09), description thereof will be omitted.

(Step 15) In the sixth embodiment, the target device 3 is swung such that a moving speed, a moving distance, or an acceleration of the prism 15 is zero or less than a preset threshold value at least at any three points in a state where a lower end of a pole 14 coincides with the measuring point 13. Alternatively, the target device 3 is swung such that, at least at any three points, direction vectors 51 at the time of the prism 15 moving to adjacent points intersect with each other at a predetermined angle of 0° or more.

For instance, as shown in FIG.11, the target device 3 is swung such that the prism 15 draws a triangle locus of passing through a first point 52a to a third point 52c. In FIG.11, each time when a moving direction of the prism 15 is changed from the first point 52a toward the second point 52b, when the moving direction of the prism 15 is changed from the second point 52b toward the third point 52c, and when the moving direction of the prism 15 is changed from the third point 52c toward the first point 52a, each moving speed becomes zero or becomes less than the threshold value.

Further, a direction vector 51a from the first point 52a to the second point 52b, and a direction vector 51b from the second point 52b to the third point 52c form a predetermined angle and intersect with each other at the second point 52b. Further, the direction vector 51b and a direction vector 51c from the third point 52c to the first point 52a form a predetermined angle and intersect with each other at the third point 52c. Further, the direction vector 51c and the direction vector 51a form a predetermined angle and intersect with each other at the first point 52a.

It is to be noted that, in FIG.11, the target device 3 is swung such that the prism 15 draws a triangle locus passing through three points (three vertices) of the first point 52a to the third point 52c. On the other hand, the target device 3 may be swung such that the prism 15 draws a quadrangular locus passing through any four points, or may be swung such that the prism 15 draws a pentagonal locus passing through any five points. Alternatively, the target device 3 may be swung so as to draw a locus starting from any one point and passing through at least four points surrounding the one point by a three-point triangle. Further, the target device 3 may be swung so as to draw a locus starting from any one point and passing through at least four points, that is, three points including the one point and one point inside a triangle formed by the three points. It is to be noted that, the one point inside the triangle is preferably at or near a center of the triangle. Further, as shown in FIG.3A, the target device 3 may be caused to swing in a cross shape. When the target device 3 is caused to swing in a cross shape, in four points, the direction vectors 51 are respectively inverted in opposite directions at four points. Alternatively, an acceleration of the prism 15 is inverted at four points in a cross shape.

(Step 16) When the target device 3 is caused to swing, the arithmetic control module 21 judges whether a speed or a distance obtained based on measurement results of the prism 15 is less than a predetermined threshold value, and obtains only a measurement result which is less than the threshold value (measurement result which satisfies the threshold value) and discards a measurement result which is the threshold value or more (measurement result which does not satisfy the threshold value).

For instance, when a measurement of the prism 15 is performed at regular intervals, the arithmetic control module 21 is configured to judge whether a distance between a measurement result (three-dimensional coordinates) of the prism 15 measured at n-th time and a measurement result (three-dimensional coordinates) of the prism 15 measured at (n-1)th time, that is, last time, is a predetermined threshold value or more, and to discard a measurement result which is the threshold value or more.

For instance, when a measurement interval is 10 Hz, a threshold value is 5 mm, and when a distance between an n-th measurement result and an (n-1)th measurement result is less than 5 mm, the arithmetic control module 21 stores the n-th measurement result in a storage module 22 (refer to FIG.2) as a high-precision measurement result. Further, when a distance between an n-th measurement result and an (n-1)th measurement result is 5 mm or more, the arithmetic control module 21 discards the n-th measurement result as a low-precision measurement result. It is to be noted that the arithmetic control module 21 calculates a speed based on a measurement interval and a distance, and the speed may be used as a threshold value.

Alternatively, when a measurement interval of the prism 15 is not constant, a timer (not shown) is provided in the surveying instrument 2, and the arithmetic control module 21 causes the timer to measure a through time from a start of tracking the prism 15 to an end of tracking. Further, each time the arithmetic control module 21 measures the prism 15, associates a measurement result of the prism 15 with a through time at the time of measurement, and stores the measurement result and the through time in the storage module 22. Further, the arithmetic control module 21 calculates a speed of the prism 15 based on a distance between an n-th measurement result and an (n-1)th measurement result and a time difference between a time of the n-th measurement and a time of the (n-1)th measurement.

At this time, the arithmetic control module 21 is configured to judge whether the calculated speed of the prism 15 is a predetermined threshold value or more and to discard a measurement result which is the threshold value or more.

For instance, when a speed of the prism 15 from an (n-1)th measuring position to an n-th measuring position is less than the threshold value, the arithmetic control module 21 stores an n-th measurement result in the storage module 22 as a high-precision measurement result which satisfies the threshold value. Further, when the speed of the prism 15 from the (n-1)th measuring positions to the n-th measuring position is the threshold value or more, the arithmetic control module 21 discards the n-th measurement result as a low-precision measurement result.

As described above, it is possible to satisfy the threshold value of the distance or speed by executing various swinging methods in (Step 15). That is, in FIG.11, only measurement results of the first point 52a to the third point 52c or measurement results around the first point 52a to the third point 52c are obtained and used in calculations of (Step 17) to (Step 19).

In the sixth embodiment, a measurement result which does not satisfy threshold value, that is, when there is a gap between a timing of the distance measurement and a timing of the angle measurement, a measurement result in which a distance occurs between a position of the prism 15 when a distance measurement is executed and a position of the prism 15 when an angle measurement is executed is discarded. Therefore, only a measurement result which satisfies the threshold value, that is, even when there is a gap between the timing of the distance measurement and the timing of the angle measurement, a measurement result in which no distance occurs between the position of the prism 15 when the distance measurement is executed and the position of the prism 15 when the angle measurement is executed is obtained.

Therefore, since it is possible to calculate a center of a sphere 26, that is, three-dimensional coordinates of the measuring point 13, only using a high-precision measurement result, it is possible to improve calculation accuracy of the measuring point 13.

Further, in the sixth embodiment, the target device 3 is swung such that the prism 15 draws a triangle locus passing through three points of the first point 52a to the third point 52c. That is, the target device 3 is swung such that a moving time of the prism 15 is minimized while ensuring three-dimensional coordinates of points required for calculating the sphere 26.

Therefore, it is possible to shorten a measuring time for obtaining three-dimensional coordinates of the measuring point 13 and to improve workability.

It is to be noted that the sixth embodiment is configured by adding the swinging method of (Step 15) and the method of obtaining only a measurement result which satisfies the threshold value of (Step 16) to the measuring method of the first embodiment. On the other hand, needless to say, the sixth embodiment may be applied to the second embodiment to the fifth embodiment.

### LEGEND OF REFERENCE NUMERALS

- 1: Surveying system
- 2: Surveying instrument
- 3: Target device
- 6: Surveying instrument main body
- 8: Distance measuring module
- 9: Tracking module
- 11: Distance measuring light
- 12: Tracking light
- 13: Measuring point
- 14: Pole
- 15: Prism
- 21: Arithmetic control module
- 26: Sphere
- 27: Reference sphere
- 28: Point cloud
- 29: Curved surface
- 31: Reference curved surface

## Claims

1. A surveying system comprising: a target device including a pole and a target of which a distance from a lower end of said pole is known, and a surveying instrument capable of measuring said target, wherein said pole is swung in a state where the lower end of said pole coincides with a predetermined measuring point, and said surveying instrument is configured to measure said target at least at three points, to calculate three-dimensional coordinates of a virtual measurement point based on each measurement result of said target, to calculate a degree of coincidence between said measuring point and said virtual measurement point as a certainty degree, and to perform an operation of completion of measurement when said certainty degree satisfies a preset threshold value.

2. The surveying system according to claim 1, wherein said surveying instrument is configured to calculate a center of a sphere fitting to each measurement result as said measuring point, using a distance from the lower end of said pole to said target as a radius, to calculate a reference sphere normalizing the radius of said sphere as 1, to calculate an area of the smallest curved surface including an entire point cloud of a surface of said reference sphere, and to calculate said certainty degree based on a comparison between said curved surface and a preset reference curved surface.

3. The surveying system according to claim 1, wherein said surveying instrument is configured to calculate a center of a sphere fitting to each measurement result as said measuring point, using a distance from the lower end of said pole to said target as a radius, to calculate a reference sphere normalizing the radius of said sphere as 1, to convert a point cloud of a surface of said reference sphere into polar coordinates centered on an average position of said point cloud, to project said point cloud on said polar coordinates onto a polar coordinate plane surface, to divide said polar coordinate plane surface into a predetermined number of division areas in a circumferential direction, to select a point farthest from a center of said polar coordinate plane surface from the point cloud in each division area, to calculate a plane surface based on each selected point cloud, and to calculate said certainty degree based on a comparison between said plane surface and a preset reference plane.

4. The surveying system according to claim 1, wherein said surveying instrument is configured to calculate a radius of a sphere fitting to each measurement result at least at four points, to compare between the radius and a distance from the lower end of said pole to said target, and to calculate said certainty degree based on a difference between the distance and the radius of said sphere.

5. The surveying system according to claim 1, wherein said surveying instrument is configured to calculate a sphere fitting to each measurement result each time said target is measured, and to calculate said certainty degree based on a distance between a center of said sphere and a center of a sphere calculated last time.

6. The surveying system according to any one of claims 2 to 4, wherein said surveying instrument is configured to calculate a standard deviation based on a distance between a center of said sphere and each measurement result, and to correct said certainty degree based on the standard deviation.

7. The surveying system according to any one of claims 1 to 5, wherein said surveying instrument further comprises a tracking function, and said surveying instrument is configured to be measurable while tracking said target.

8. The surveying system according to claim 7, wherein said surveying instrument is configured to sequentially calculate a sphere fitting to at least three measurement results of said target continuously measured, each time said target is measured, and to judge whether said target device is installed at said measuring point based on whether a distance between centers of respective spheres converges within a range of a preset threshold value.

9. The surveying system according to claim 7, wherein said surveying instrument is configured to measure said target at predetermined time intervals, to calculate a center of a sphere fitting to at least three measurement results of said target continuously measured, as said virtual measurement point, each time said target is measured, and to judge that said target device is installed at said measuring point when the certainty degree of said virtual measurement point satisfies said threshold value.

10. The surveying system according to claim 7, wherein said surveying instrument is configured to measure said target at predetermined time intervals, to calculate a center of a sphere fitting to a measurement result of said target before a predetermined time, as said virtual measurement point, each time said target is measured, to judge that said target device is installed at said measuring point when the certainty degree of said virtual measurement point satisfies said threshold value, and to calculate a center of the sphere fitting to the latest measurement result, as said measuring point.

11. The surveying system according to claim 1, wherein said surveying instrument is configured to calculate a distance between said targets or a speed of said target based on a measurement result of said target and a measurement result of said target measured one time before, to compare the distance or speed with a preset threshold value, and to discard a measurement result judged to be the threshold value or more.

12. A surveying method comprising a step of causing a pole to swing in a state where a lower end of said pole coincides with a predetermined measuring point, a step of causing a surveying instrument to measure a target provided at a position where a distance from the lower end of said pole is known, at least at three points, a step of causing said surveying instrument to calculate three-dimensional coordinates of a virtual measurement point based on each measurement result of said target, a step of causing said surveying instrument to calculate a degree of coincidence between said measuring point and said virtual measurement point as a certainty degree, and a step of causing said surveying instrument to provide notification of an alarm indicating completion of measurement when the certainty degree satisfies a preset threshold value.

13. The surveying method according to claim 12, wherein in the step of causing said pole to swing, a distance or a speed between a measurement result of said target measured at said three points and a measurement result of said target measured at said three points one time before are less than a preset threshold value.

14. The surveying method according to claim 13, wherein in the step of causing said pole to swing, causing said pole to swing such that said target draws a locus which passes through said three points and one point inside a triangle formed of said three points.

15. A surveying program for causing a surveying instrument to execute processing, the processing comprising a process of measuring a target at least at three points, the target provided at a position where a distance from a lower end of a pole is known and swung in a state where the lower end of said pole coincides with a measuring point, a process of calculating three-dimensional coordinates of a virtual measurement point based on each measurement result of said target, a process of calculating a degree of coincidence between said measuring point and said virtual measurement point as a certainty degree, and a process of providing notification indicating completion of measurement when said certainty degree satisfies a preset threshold value.
